# NEUE EUROPÄISCHE PATENTSCHRIFT

(11) **EP 2 323 887 B2**
(45) Veröffentlichungstag und Bekanntmachung des Hinweises auf die Entscheidung über den Einspruch: **21.04.2021**
(45) Hinweis auf die Patenterteilung: 18.07.2012
(21) Anmeldenummer: 09777481.4
(22) Anmeldetag: 28.07.2009
(51) Int. Cl.: B61L 25/02

(54) **VERFAHREN ZUR STEUERUNG EINES HYBRIDANTRIEBS IN EINEM SCHIENENFAHRZEUG**
METHOD FOR CONTROLLING A HYBRID DRIVE IN A RAIL VEHICLE
PROCÉDÉ POUR COMMANDER UN GROUPE PROPULSEUR HYBRIDE DANS UN VÉHICULE FERROVIAIRE

(30) Priorität: 12.08.2008 DE 102008038753
(43) Veröffentlichungstag der Anmeldung: 25.05.2011
(73) Patentinhaber: MTU FRIEDRICHSHAFEN GMBH, 88045 Friedrichshafen (DE)
(72) Erfinder: LEHMANN, Ingo, 88696 Owingen (DE); BOTTLANG, Holger, 78315 Radolfzell (DE)
(74) Vertreter: Kordel, Mattias
(86) Internationale Anmeldenummer: PCT/EP2009/005450
(87) Internationale Veröffentlichungsnummer: WO 2010/017887

(56) Entgegenhaltungen:
- EP-A1- 1 466 803
- DD-A1- 129 761
- DE-A1- 19 935 349
- DE-A1- 19 935 352
- US-A1- 2006 005 738
- US-A1- 2008 077 285
- US-A1- 2008 125 924
- US-A1- 2008 183 345

## Beschreibung

Die Erfindung betrifft ein Verfahren zur Steuerung eines Hybridantriebs in einem Schienenfahrzeug, bei dem ein elektronischer Streckenfahrplan als streckenabschnittsbezogene Geschwindigkeiten über ein Zugsteuergerät vorgegeben wird.

Bei einem aus der DE 102 26 143 B4 bekannten Verfahren zur Steuerung eines Hybridantriebs wird die Antriebsart von einer Fahrbetriebsstrategie vorgeschlagen. Die vorgeschlagene Fahrbetriebsstrategie gilt als gesetzt, wenn der Fahrer nicht in das System eingreift. Betätigt der Fahrer hingegen kurzfristig das Fahr- oder das Bremspedal, so wird die vorgeschlagene Fahrbetriebsstrategie verworfen und eine neue Fahrbetriebsstrategie berechnet. Dies erfolgt so lange, bis ein stationärer Zustand erreicht wird, in welchem keine weiteren kurzfristigen Änderungen mehr auftreten. Bestimmt wird die Fahrbetriebstrategie an Hand eines Energieprofils, beispielsweise im Hinblick auf den Verbrauch und den Zeitbedarf. Das Energieprofil wiederum wird aus Fahrer-, Fahrzeug-, Fahrstrecken- und Wetterdaten sowie fahrerspezifischer Daten berechnet. Die Fahrstreckendaten werden aus einer digitalen Straßenkarte mit Höhenangabe oder von einem GPS eingelesen. Über ein RDS-TMC-System soll das Energieprofil an zu erwartende geänderte Verkehrswegbedingungen oder Verkehrsbedingungen, beispielsweise Stau, angepasst werden. Zur Umsetzung werden jedoch keine weiteren Ausführungen gemacht. Das vorgeschlagene Verfahren ist auf ein Kraftfahrzeug und der letztendlich bestimmenden Festlegung der Antriebsart durch den Fahrer ausgerichtet, wodurch die Kraftstoffeinsparung schwer abschätzbar ist.

Aus der DD 129 761 PS ist ein Verfahren zur energiesparenden Zugsteuerung im Nahverkehr bekannt. Bei diesem Verfahren werden unter der Voraussetzung der Fahrplaneinhaltung unterschiedliche Trajektorien wegabhängig vorausberechnet und in einem Festwertspeicher zeit- oder fahrabschnittsabhängig abrufbar gespeichert. Die Auswahl der passenden Trajektorie erfolgt anhand einer Zeitreserve. Bei diesem Verfahren sind die Möglichkeiten, welche ein Schienenfahrzeug mit Hybridantrieb bietet, noch nicht berücksichtigt.

Die US 2008/0125924 A1 beschreibt Verfahren für ein Schienenfahrzeug, bei dem über eine Berechnung ein optimierter Fahrplan mit minimalen Kraftstoffverbrauch und minimalen Emissionen berechnet wird. Die Berechnung erfolgt anhand eines ausgewählten Modells, welches das Verhalten des Schienenfahrzeugs beschreibt, und anhand einer Positionserkennung. Auch bei diesem Verfahren sind die Möglichkeiten, welche ein Schienenfahrzeug mit Hybridantrieb bietet, noch nicht berücksichtigt.

Aus der US 2008/0183345 A1 sind ein System und ein Verfahren für optimierte Treibstoffeffizienz und optimierten Emissionsausstoß einer Lokomotive beschrieben. Es wird die Fahrt der Lokomotive geplant, um ein Fahrtprofit zu erstellen. Zum Planen werden Eingabeinformationen eingesetzt, die beispielsweise die Zugposition und die beabsichtigte Fahrtroute umfassen. Die Planung soll den Treibstoffverbrauch und/oder die erzeugten Emissionen in Abhängigkeit von Höchstgeschwindigkeiten entlang der Strecke und den gewünschten Abfahrts- und Ankunftszeiten minimieren. Das so erstellte Profil enthält die vom Zug zu befolgenden optimalen Geschwindigkeits- und Leistungs-Einstellungen. Das optimale Profil kann unter Verwendung von Differenzialgleichungsmodellen berechnet werden. Ein in Ausführung befindlicher Plan kann modifiziert werden. Beim Modifizieren wird der tatsächliche Standort der Lokomotive dazu verwendet, einen Vergleich zwischen einer geplanten Ankunftszeit und der aktuell geschätzten Ankunftszeit durchzuführen. Basierend auf dem Unterschied der beiden Zeiten, wird der Plan angepasst. Dabei kann z. B. festgelegt werden, dass eine Verzögerung des Zugs um den Preis eines erhöhten Treibstoffverbrauchs ausgeglichen werden soll. Die Lokomotive kann verschiedene Energiespeicher aufweisen. Des Weiteren kann die Lokomotive einen Dieselmotor und eine Batterie enthalten. Die Leistungen, die diesen Quellen entnommen werden können, können so optimiert werden, dass eine maximale Treibstoffeffizienz/Emission erreichbar ist.

Aus der Dissertation "Optimierung von Fahrweisen im spurgeführten Verkehr und deren Umsetzung" von Ulrich Linder, Berlin 2004, ist bekannt, dass eine energiesparsame Fahrweise eines Schienenfahrzeugs mittels eines Algorithmus' bestimmt werden kann. Dabei kann der Energieverbrauch unter Berücksichtigung der Streckentopografie, der Streckenhöchstgeschwindigkeiten, der Fahrzeugdaten sowie der Streckenbelegung und des Fahrplans minimiert werden. Für das Minimieren des Energieverbrauchs werden bestimmte Fahrphasen ermittelt. Diese theoretisch ermittelten Fahrphasen sollen an einen realen Fahrzustand angepasst werden, der durch Position, Zeit, Geschwindigkeit und Fahrstufe des Schienenfahrzeugs charakterisiert ist.

Die WO 03/097424 A1 beschreibt ein Fahrassistenzsystem zum Betreiben eines Zugs. Dabei werden eine momentane Position und eine momentane Geschwindigkeit des Zugs ermittelt. Ferner werden Parameter eines Leistungsmodells des Zugs abgeschätzt und es wird eine energieeffiziente Fahrstrategie berechnet. Parameter des Leistungsmodells, die vor Beginn der Fahrt noch nicht bekannt sind, sollen während der Fahrt abgeschätzt werden. Des Weiteren wird ein Reiseprofil zwischen einem gegebenen Reisezustand und einem Ziel-Reisezustand ermittelt. Das Reiseprofil kann während der Fahrt erneut berechnet werden.

Der Erfindung liegt die Aufgabe zu Grunde, ein Verfahren zur Steuerung eines Hybridantriebs in einem Schienenfahrzeug bereitzustellen, welches den Rahmenbedingungen dieses Verkehrsystems auch in Kostenhinsicht gerecht wird.

Die Erfindung löst diese Aufgabe durch ein Verfahren mit den Merkmalen des Anspruchs 1. Die Ausgestaltungen sind in den Unteransprüchen dargestellt.

Die Rahmenbedingungen beim Betrieb eines Schienenfahrzeugs werden durch den elektronischen Streckenfahrplan vorgegeben, welcher - wie bekannt - vor Fahrtantritt über Richtfunk in das Zugsteuergerät eingelesen wird. Im elektronischen Streckenfahrplan sind die streckenabschnittsbezogenen Geschwindigkeiten und damit auch der Zeitrahmen zwischen zwei Wegpunkten hinterlegt. Das Verfahren besteht nun darin, dass vor Fahrtantritt die streckenabschnittsbezogenen Antriebsarten des Schienenfahrzeugs mittels des elektronischen Streckenfahrplans prädiktiv festgelegt werden. Im Fahrbetrieb wird dann eine Positionsabweichung der Ist-Position zu einer aus dem elektronischen Streckenfahrplan ermittelten Soll-Position des Schienenfahrzeugs bestimmt. Aus der Positionsabweichung wiederum wird eine Zeitreserve berechnet. An Hand der Zeitreserve wird dann entweder die Antriebsart beibehalten oder gewechselt. Beispielsweise bei einer negativen Zeitreserve im Sinne einer Verspätung wird in eine Antriebsart mit höherer Leistungsabgabe gewechselt.

Aus Sicherheitsgründen wird vor Aktivierung der Antriebsart höherer Leistungsabgabe geprüft, ob die zu erwartende Geschwindigkeit signifikant von derjenigen Geschwindigkeit, welche durch den elektronischen Streckenfahrplan definiert ist, abweicht. Bei einer signifikanten Abweichung muss zuerst durch die Leitstelle eine Freigabe erteilt werden, beispielsweise indem diese einen modifizierten elektronischen Streckenfahrplan zur Verfügung stellt. Dieselbe Betrachtung gilt auch für den Fall, dass eine Antriebsart niedrigerer Leistungsabgabe initiiert werden soll.

Zur prädiktiven Festlegung der streckenabschnittsbezogenen Antriebsarten vor Fahrtantritt wird ein entsprechendes Modell als prädiktiver Beobachter verwendet. Über dieses Modell werden ebenfalls die Soll-Systemgrößen des Hybridantriebs, beispielsweise eine Soll-Motorleistung, bestimmt. Während des Fahrbetriebs werden die Ist-Systemgrößen eingelesen und eine Abweichung derist-von den Soll-Systemgrößen berechnet. Über eine Grenzwertbetrachtung wird dann entschieden, ob kein Eingriff in das System erfolgt oder ob das Modell mittels der Ist-Systemgrößen trainiert wird. Die Ausgangsgröße des Modells wird über eine Optimierung und einem Berechnungsalgorithmus, beispielsweise mittels des Maximumprinzips nach Pontrjagin und mittels der dynamischen Programmierung nach Bellman, bestimmt. Als weitere Sicherheitsmaßnahme ist vorgesehen, dass das Modell von einem Sicherheitsmanagement überwacht wird. Das Sicherheitsmanagement prüft die Eingangsgrößen, die Ausgangsgröße und die internen Parameter des Modells. Da der Ladezustand des elektrischen Energiespeichers, beispielsweise bestehend aus mehreren Lithium-lonenspeichern (Super-Caps), sicherheitskritisch ist, wird dieser überwacht und bei nicht plausiblen Werten der Energiespeicher gestuft oder vollständig deaktiviert.

Die prädiktive Regelung gehört zur Klasse der modellbasierten Regelungsverfahren und gestattet eine Vorhersage in die Zukunft, dem so genannten Prädiktionshorizont. ZentralerGedanke der Erfindung ist die Nutzung des elektronischen Streckenfahrplans, welcher in Verbindung mit einem Höhenprofil als vorausschauendes Verfahren in vorteilhafter Weise das Kraftstoff-Einsparpotential in vollem Umfang nutzt. Das heißt, die eingesetzte Energie wird über die prädiktive Regelung minimiert. Für den Betreiber verringern sich daher die Betriebskosten. Selbstverständlich bietet das Modell auch die Möglichkeit ein individuelles Verhaltensmuster des Schienenfahrzeugführers zu erfassen und abzuspeichern. Beim erneuten Durchfahren derselben Wegstrecke mit demselben Schienenfahrzeugführer kann dann auf dessen individuelles Verhaltensmuster zurückgegriffen werden.

In den Figuren ist ein bevorzugtes Ausführungsbeispiel dargestellt. Es zeigen:
- Figur 1: eine Informationsstruktur als Blockschaltbild,
- Figur 2: einen Programm-Ablaufplan,
- Figur 3: ein erstes Unterprogramm UP1 und
- Figur 4: ein zweites Unterprogramm UP2.

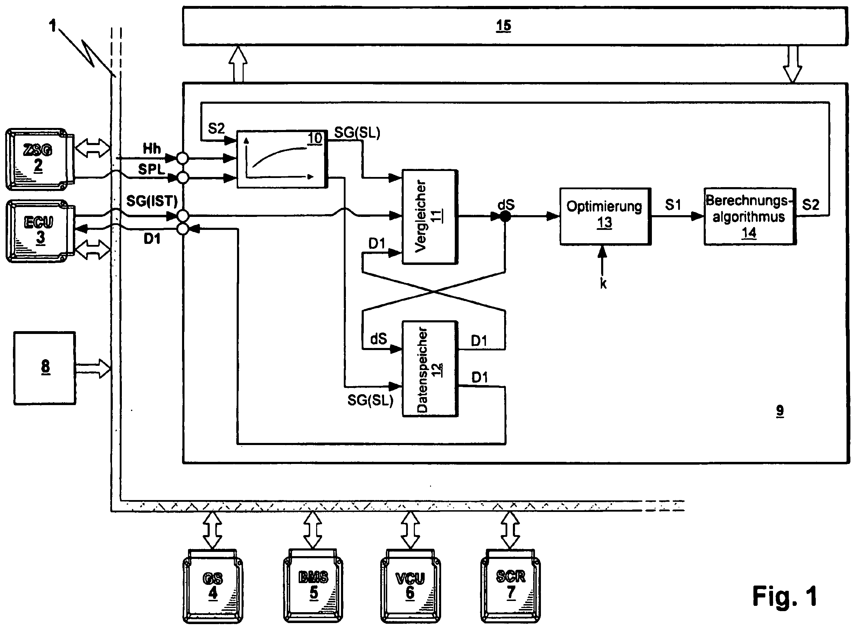

Die Figur 1 zeigt die Informationsstruktur eines Hybridantriebs für ein Schienenfahrzeug als Blockschaltbild. Typischerweise umfasst ein Hybridantrieb eine Brennkraftmaschine, einen Elektromotor, ein Getriebe, elektrische Umrichter und einen elektrischen Energiespeicher, beispielsweise ein Lithium-lonenspeicher (Super-Caps). An einem gemeinsamen elektronischen Datenbus 1, beispielsweise einem CAN-Bussystem oder Ethernet, sind ein Zugsteuergerät 2 (ZSG), ein Motorsteuergerät 3 (ECU), ein Getriebesteuergerät 4 (GS), ein Batteriemanagement-Steuergerät 5 (BMS), ein Umrichtersteuergerät 6 (VCU) und exemplarisch ein Steuergerät 7 zur Festlegung des Abgases (SCR) angeschlossen. Die am Datenbus 1 angeschlossenen Steuergeräte 2 bis 7 sind sowohl Empfänger als auch Sender. Ebenfalls am Datenbus 1 angeschlossen ist eine Einheit 8 zum Empfang des Bahnrichtfunks und der Daten des GPS. Über den Bahnrichtfunk wird der elektronische Streckenfahrplan mit hinterlegter elektronischer Streckenkarte auf dem Datenbus gesetzt. Die Daten des GPS umfassen die Ist-Position und die aktuelle Höhe.

Ergänzt wird diese Informationsstruktur durch ein Modell 9 als prädiktiver Beobachter und ein Sicherheitsmanagement 15. Das Sicherheitsmanagement 15 überwacht die Eingangsgrößen, die Ausgangsgröße und die Parameter des Modells 9. Die Eingangsgrößen des Modells 9 sind der elektronische Streckenfahrplan SPL, die Ist-Systemgrößen SG(IST) und die aktuelle Höhe Hh. Der elektronische Streckenfahrplan SPL mit hinterlegter elektronischer Streckenkarte wird vom Zugsteuergerät 2 bereitgestellt. Im elektronischen Streckenfahrplan SPL sind die streckenabschnittsbezogenen Geschwindigkeiten, beispielsweise die zulässige Geschwindigkeit zwischen einem Wegpunkt A und einem Wegpunkt B, enthalten. An Hand der streckenabschnittsbezogenen Geschwindigkeiten sind auch die Zeiten zwischen den Wegpunkten definiert. Die aktuelle Höhe Hh wird von der Einheit 8 auf dem Datenbus 1 bereitgestellt. Die Ist-Systemgrößen SG(IST) werden vom Motorsteuergerät 3 bereitgestellt und entsprechen ganz allgemein den verfügbaren Einzeldaten aller am Datenbus 1 angeschlossenen Steuergeräte 2 bis 7 einschließlich der Einheit 8. Hierunter sind zum Beispiel die Ist-Drehzahl der Brennkraftmaschine, die Ist-Motorleistung, der Ist-Kraftstoffverbrauch, der Status des Energiespeichers, die Ist-Position des Schienenfahrzeugs sowie die Öl-, die Energiespeicher-, die Kühlwasser- und die Umrichtertemperatur zu verstehen. Die Ausgangsgröße des Modells 9 ist das Signal D1, welches auf das Motorsteuergerät 3 geführt wird.

Innerhalb des Modells 9 sind als funktionale Einheiten eine modellbasierte Berechnung 10, ein Vergleicher 11, ein Datenspeicher 12, eine Optimierung 13 und ein Berechnungsalgorithmus 14 als Funktionsblock angeordnet. In der Berechnung 10 ist die Regelstrecke mathematisch abgebildet. Die Eingangsgrößen der Berechnung 10 sind der elektronische Streckenfahrplan SPL, die aktuelle Höhe Hh und ein Signal S2. Über die Berechnung 10 werden die Soll-Systemgrößen SG(SL), zum Beispiel die Soll-Position oder die Soll-Motorleistung, berechnet. Die Soll-Systemgrößen SG(SL) werden auf den Vergleicher 11 geführt und parallel im Datenspeicher 12 streckenabschnittsbezogen abgespeichert. Über den Vergleicher 11 werden die Soll-Systemgrößen SG(SL), die Ist-Systemgrößen SG(IST) und die im Datenspeicher 12 abgelegten Daten, Signal D1, miteinander verglichen. Die hieraus sich ergebende Abweichung dS wird zum einen im Datenspeicher 12 abgelegt und zum anderen als Eingangsgröße auf die Optimierung 13 geführt. Über die Optimierung 13 wird in Abhängigkeit eines vorgebbaren Gewichtungsfaktors k die Abweichung dS hinsichtlich der Kosten beurteilt. Liegt die Abweichung dS unterhalb eines vorgegebenen Grenzwerts, wird der letzte Wert beibehalten, das heißt, es erfolgt keine weitere Optimierung. Ist die Abweichung dS größer als der Grenzwert, so wird der aktuelle Wert als Ausgangsgröße gesetzt, Signal S1. Die Signalwerte S1 entsprechen einer Kostenfunktion, welche mittels des Maximumprinzips nach Pontrjagin und mittels der dynamischen Programmierung nach Bellman bestimmt werden. Im nachfolgenden Berechnungsalgorithmus 14 wird das Signal S1 über einen vorgegebenen Algorithmus bewertet. Hierfür anwendbare, bekannte Algorithmen sind die Levenberg-Marquart-Methode, die Newton-Verfahren oder das Nelder-Meat-Verfahren. Die Ausgangsgröße des Berechnungsalgorithmus 14 entspricht einem Stellgrößenverlauf für den betrachteten Prädiktionshorizont, welche als Signal S2 auf die Berechnung 10 zurückgekoppelt wird. Über den Rückkoppelungszweig mit Optimierung 13 und Berechnungsalgorithmus 14 wird die modellbasierte Berechung 10 so lange trainiert, bis ein Minimum gefunden wurde. Im Datenspeicher 12 sind streckenabschnittsbezogen sowohl die Abweichung dS als auch die Soll-Systemgrößen SG(SL) abgespeichert.

Vor Fahrtantritt werden über das Modell 9 an Hand des elektronischen Streckenfahrplans SPL und des Höhenprofils der Fahrtstrecke die streckenabschnittsbezogenen Antriebsarten prädiktiv berechnet. Diese werden im Datenspeicher 12 streckenabschnittsbezogen hinterlegt. Beispielsweise eine rein verbrennungsmotorische Antriebsart bei einem Streckenabschnitt mit Steigung oder eine Antriebsart mit Rekuperation (Energie-Rückspeisung) bei einem Streckenabschnitt mit Gefälle. Während des Fahrbetriebs beurteilt das Motorsteuergerät 2 an Hand der Daten D1 den aktuellen Zustand des Gesamtsystems und veranlasst gegebenenfalls über den Datenbus 1 eine Änderung der Antriebsart. Am Beispiel einer Positionsabweichung wird dies näher erklärt.

Die Soll-Position wird über die Berechnung 10 als eine der Soll-Systemgrößen SG(SL) bestimmt. Die Ist-Position wird als eine der Ist-Systemgrößen SG(IST) vom Motorsteuergerät 3 dem Modell 9 als Eingangsgröße bereitgestellt. Der Vergleicher 11 berechnet eine Abweichung dS der Ist-Systemgrößen SG(IST) zu den Soll-Systemgrößen SG(SL). Die Abweichung dS entspricht in diesem Beispiel also einer Positionsabweichung. Diese wird im Datenspeicher 12 streckenabschnittsbezogen abgelegt. Die Datenwerte D1 werden zyklisch vom Motorsteuergerät 2 eingelesen und beurteilt. Hierzu berechnet das Motorsteuergerät 2 an Hand des Datenwerts D1, welcher die Positionsabweichung kennzeichnet, eine Zeitreserve. Bei einer negativen Zeitreserve im Sinne einer Verspätung wird in eine Antriebsart mit höherer Leistungsabgabe gewechselt. Bei einer Zeitreserve innerhalb eines Toleranzbands wird die Antriebsart beibehalten und bei einer positiven Zeitreserve im Sinne eines verfrühten Ankommens wird in eine Antriebsart mit niedrigstem Energieverbrauch gewechselt. Würde das Schienenfahrzeug den nächsten Wegpunkt, zum Beispiel einen Bahnhof, zu spät erreichen, so initiiert das Motorsteuergerät 3 ein Wechsel in die kombinierte Antriebsart aus Brennkraftmaschine und Elektromotor. Die kombinierte Antriebsart bewirkt eine erhöhte zu erwartende Geschwindigkeit. Aus Sicherheitsgründen wird vor Aktivierung der Antriebsart höherer Leistungsabgabe geprüft ob die zu erwartende Geschwindigkeit signifikant von derjenigen Geschwindigkeit, welche durch den elektronischen Streckenfahrplan definiert ist, abweicht. Ist dies der Fall, muss zuerst durch die Leitstelle eine Freigabe erteilt werden, beispielsweise indem diese einen modifizierten elektronischen Streckenfahrplan zur Verfügung stellt.

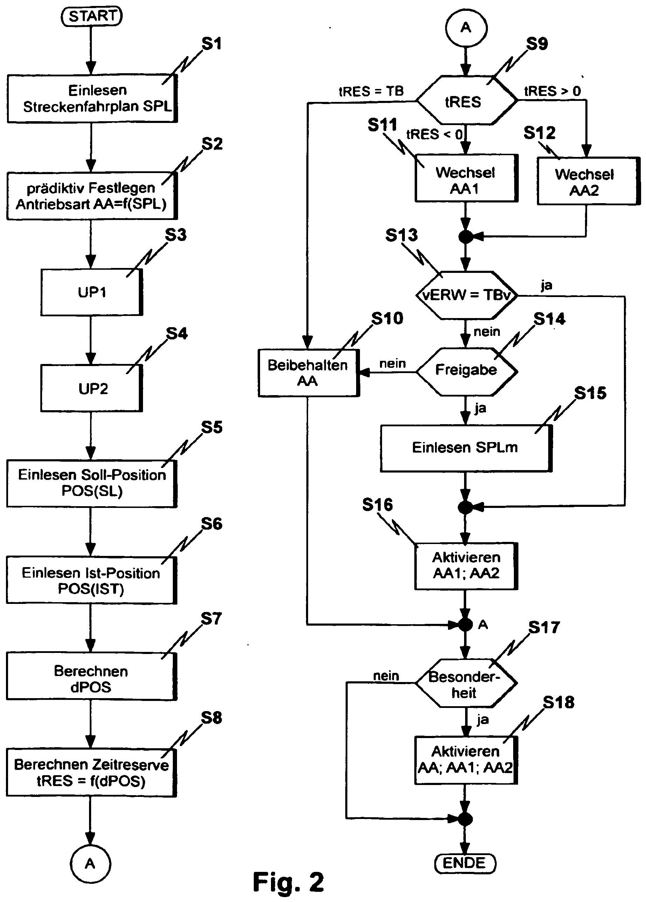

In der Figur 2 ist ein Programm-Ablaufplan des Verfahrens dargestellt. Dem Programm-Ablaufplan wurde das zuvor beschriebene Beispiel einer Positionsabweichung zu Grunde gelegt.

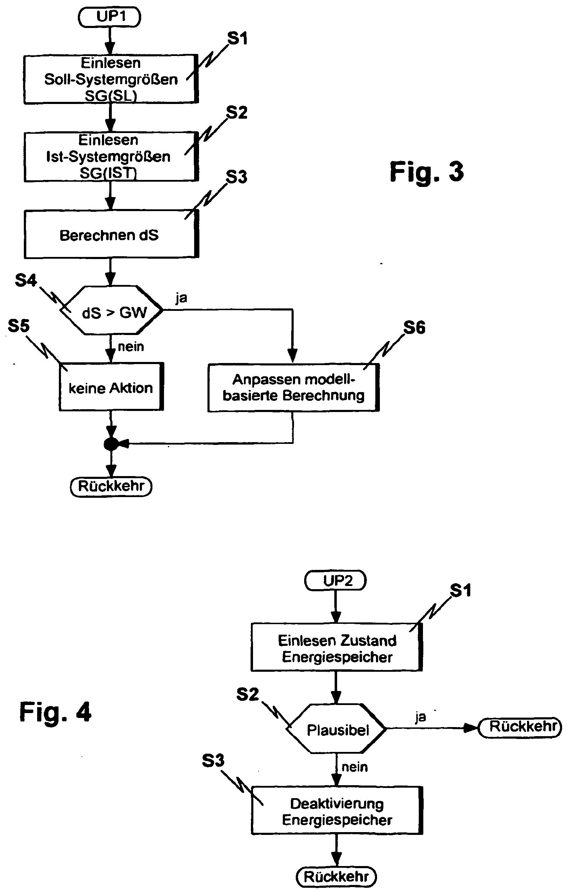

Bei S1 wird der elektronische Streckenfahrplan SPL mit der hinterlegten Streckenkarte über Bahnrichtfunk eingelesen und im Zugsteuergerät abgelegt. Vor Fahrtantritt werden bei S2 über das Modell die streckenabschnittsbezogenen Antriebsarten AA prädiktiv bestimmt und im Datenspeicher (Fig. 1:12) gespeichert. Im praktischen Fahrbetrieb wird dann bei S3 in ein erstes Unterprogramm UP1 zur Anpassung des Modells verzweigt. Das erste Unterprogramm UP1 ist in der Figur 3 dargestellt und wird in Verbindung mit dieser erläutert. Nach der Rückkehr aus dem ersten Unterprogramm UP1 wird bei S4 in ein zweites Unterprogramm UP2 zur Prüfung des Energiespeichers verzweigt. Das zweite Unterprogramm UP2 ist in der Figur 4 dargestellt und wird in Verbindung mit dieser erläutert. Bei S5 wird die Soll-Position POS(SL) des Schienenfahrzeugs über die modellbasierte Berechnung (Fig. 1: 10) als eine der Soll-Systemgrößen berechnet und bei S6 die Ist-Position POS(IST) als eine der Ist-Systemgrößen aus dem Motorsteuergerät ausgelesen. Im Anschluss daran wird bei S7 die Ist-Position POS(IST) mit der Soll-Position POS(SL) verglichen, woraus eine Abweichung (Fig. 1: dS), hier: eine Positionsabweichung dPOS, sich bestimmt. Die Positionsabweichung dPOS wird streckenabschnittsbezogen im Datenspeicher abgelegt und zyklisch vom Motorsteuergerät ausgelesen. Aus der Positionsabweichung dPOS wiederum berechnet das Motorsteuergerät eine Zeitreserve tRES bei S8. Im Anschluss daran wird bei S9 die Zeitreserve tRES beurteilt. Liegt diese innerhalb eines Toleranzbands TB (tRES=TB) wird bei S10 die aktuelle Antriebsart AA beibehalten und der Programmablauf beim Punkt A fortgesetzt. Liegt die Zeitreserve tRES außerhalb des Toleranzbands TB und ist negativ im Sinne einer Verspätung (tRES<0), wird bei S11 in eine Antriebsart AA1 mit höherer Leistungsabgabe gewechselt und der Programmablauf bei S13 fortgesetzt. Liegt die Zeitreserve tRES außerhalb des Toleranzbands TB und ist positiv im Sinne eines verfrühten Ankommens (tRES>0), wird bei S12 in eine Antriebsart AA2 mit niedrigstem Energieverbrauch gewechselt und der Programmablauf bei S13 fortgesetzt.

Wurde bei S11 oder bei S12 ein Wechsel der Antriebsart berechnet, so wird bei S13 geprüft, ob die zu erwartende Geschwindigkeit vERW innerhalb eines zulässigen Bereichs TBv liegt, welcher durch den Streckenfahrplan vorgegeben wird. Bei positivem Ergebnis (S13: ja) wird bei S16 die entsprechende Antriebsart gesetzt und der Programmablauf am Punkt A fortgesetzt. Bei negativen Ergebnis (S13: nein), das heißt, die zu erwartende Geschwindigkeit vERW liegt außerhalb des zulässigen Bereichs TBv, wird bei S14 geprüft, ob eine Freigabe durch die Leitstelle vorliegt. Liegt diese vor (S14: ja), so wird bei S15 der modifizierte Streckenfahrplan SPLm eingelesen, die zuvor bestimmte Antriebsart bei S16 aktiviert und der Programmablauf beim Punkt A fortgesetzt. Erteilt die Leitstelle keine Freigabe (S14: nein), bleibt die aktuelle Antriebsart AA gesetzt, S10, und der Programmablauf wird am Punkt A fortgesetzt. Im Anschluss an Punkt A wird bei S17 geprüft, ob eine Besonderheit vorliegt. Eine Besonderheit ist zum Beispiel eine Langsamfahrstelle oder ein Streckenbereich mit vorgeschriebener Antriebsart, wie etwa eine rein elektrische Antriebsart im Bahnhofsbereich. Liegt eine Besonderheit vor (S17: ja), wird die vorgeschriebene Antriebsart gesetzt, S18, und der Programmablauf beendet. Liegt keine Besonderheit vor (S17: nein), bleibt die aktuelle Antriebsart gesetzt und der Programmablauf wird beendet.

In der Figur 3 ist ein erstes Unterprogramm UP1 dargestellt, in welches aus S3 im Programm-Ablaufplan der Figur 2 verzweigt wird. Über das erste Unterprogramm UP1 werden die Systemgrößen bewertet und die modellbasierte Berechnung (Fig. 1: 10) zur Berechnung der Soll-Systemgrößen trainiert. Bei S1 werden die Soll-Systemgrößen SG(SL) über die modellbasierte Berechnung bestimmt und eingelesen. Danach werden bei S2 die Ist-Systemgrößen SG(IST) aus dem Motorsteuergerät ausgelesen und bei S3 die Ist-Systemgrößen SG(IST) mit den Soll-Systemgrößen SG(SL) verglichen. Die sich hieraus ergebende Abweichung dS wird im Anschluss bei S4 mit einem Grenzwert GW verglichen. Ist die Abweichung dS kleiner als der Grenzwert GW (S4: nein), erfolgt keine Aktion, S5. Das heißt die modellbasierte Berechnung ist bereits optimiert. Danach wird zu S3 im Programm-Ablaufplan der Figur 2 zurückgekehrt. Wurde bei S4 festgestellt, dass die Abweichung dS größer als der Grenzwert GW ist (S4: ja), wird bei S6 die modellbasierte Berechnung angepasst (Fig. 1: 13, 14) und zu S3 im Programm-Ablaufplan der Figur 2 zurückgekehrt.

In der Figur 4 ist ein zweites Unterprogramm UP2 dargestellt, in welches aus S4 im Programm-Ablaufplan der Figur 2 verzweigt wird. Über das zweite Unterprogramm UP2 wird der Energiespeicher, beispielsweise ein Lithium-Ionenspeicher, geprüft. Bei S1 wird vom Motorsteuergerät über den Datenbus der Zustand des Energiespeichers eingelesen. Die entsprechenden Daten des Energiespeichers werden vom Batteriemanagement-Steuergerät (BMS) auf dem Datenbus bereitgestellt. Danach werden bei S2 diese auf Plausibilität geprüft. Sind diese plausibel (S2: ja), wird zu S4 im Programm-Ablaufplan der Figur 2 zurückgekehrt. Bei unplausiblen Daten (S2: nein) werden bei S3 einzelne oder bis zu alle Zellen des Energiespeichers deaktiviert, ein Fehlerflag gesetzt und dann zu S4 im Programm-Ablaufplan der Figur 2 zurückgekehrt.

### Bezugszeichen

- 1: Datenbus
- 2: Zugsteuergerät (ZSG)
- 3: Motorsteuergerät (ECU)
- 4: Getriebesteuergerät (GS)
- 5: Batteriemanagement-Steuergerät (BMS)
- 6: Umrichtersteuergerät (VCU)
- 7: Steuergerät zur Festlegung des Abgases (SCR)
- 8: Einheit
- 9: Modell
- 10: modellbasierte Berechnung
- 11: Vergleicher
- 12: Datenspeicher
- 13: Optimierung
- 14: Berechnungsalgorithmus
- 15: Sicherheitsmanagement

## Patentansprüche

1. Verfahren zur Steuerung eines Hybridantriebs in einem Schienenfahrzeug, bei dem ein elektronischer Streckenfahrplan (SPL) als streckenabschnittsbezogene Geschwindigkeiten über ein Zugsteuergerät (2) vorgegeben wird, vor Fahrtantritt streckenabschnittsbezogene Antriebsarten (AA) des Schienenfahrzeugs mittels des elektronischen Streckenfahrplans (SPL) über ein Modell (9) prädiktiv bestimmt werden, wobei das Modell (9) eine Berechnung (10) aufweist, bei dem über das Modell (9) Soll-Systemgrößen (SG(SL)) des Hybridantriebs bestimmt werden, bei dem im Fahrbetrieb eine Abweichung (dS) von Ist-Systemgrößen (SG(IST)) von den Soll-Systemgrößen (SG(SL)) berechnet wird, bei dem an Hand der Abweichung (dS) über eine Grenzwertbetrachtung entschieden wird, ob das Modell (9) mittels der Ist-Systemgrößen (SG(IST)) trainiert wird, wobei die Berechnung (10) angepasst wird, oder ob keine Aktion zum Anpassen der Berechnung (10) erfolgt, bei dem im Fahrbetrieb eine Positionsabweichung (dPOS) einer Ist-Position (POS(IST)) zu einer Soll-Position (POS(SL)) des Schienenfahrzeugs bestimmt wird, wobei die Soll-Position (POS(SL)) über die angepasste Berechnung (10) aus dem elektronischen Streckenfahrplan (SPL) ermittelt wird, an Hand der Positionsabweichung (dPOS) eine Zeitreserve (tRES) berechnet wird und bei dem in Abhängigkeit von der Zeitreserve (tRES) eine aktuelle Antriebsart (AA) beibehalten oder gewechselt wird.

2. Verfahren nach Anspruch 1,
**dadurch gekennzeichnet,**
**dass** bei einer negativen Zeitreserve (tRES) im Sinne einer Verspätung in eine Antriebsart (AA1) mit höherer Leistungsabgabe gewechselt wird, bei einer Zeitreserve (tRES) innerhalb eines Toleranzbands (TB) die Antriebsart (AA) beibehalten wird und bei einer positiven Zeitreserve (tRES) im Sinne eines verfrühten Ankommens in eine Antriebsart (AA2) mit niedrigstem Energieverbrauch gewechselt wird.

3. Verfahren nach Anspruch 2,
**dadurch gekennzeichnet,**
**dass** in die Antriebsart (AA1) mit höherer Leistungsabgabe oder mit niedrigstem Energieverbrauch (AA2) nach Freigabe durch eine Leitstelle oder nach Freigabe eines modifizierten elektronischen Streckenfahrplans (SPLm) gewechselt wird.

4. Verfahren nach Anspruch 1,
**dadurch gekennzeichnet,**

5. Verfahren nach Anspruch 4,
**dadurch gekennzeichnet,**
**dass** kein Eingriff in das System erfolgt, wenn die Abweichung (dS) der Ist-Systemgrößen (SG(IST)) zu den Soll-Systemgrößen (SG(SL)) kleiner als ein Grenzwert (GW) ist und bei einer Abweichung (dS) größer als der Grenzwert (GW) das Modell (9) mittels der Ist-Systemgrößen (SG(IST)) angepasst wird.
**dass** vor Fahrtantritt die streckenabschnittsbezogenen Antriebsarten (AA) und Soll-Systemgrößen (SG (SL)) des Hybridantriebs über das Modell (9) an Hand des elektronischen Streckenfahrplans (SPL), eines Höhenprofils und der Umweltbedingungen prädiktiv bestimmt werden.

6. Verfahren nach Anspruch 5,
**dadurch gekennzeichnet,**
**dass** das Modell (9) mittels eines vorgegebenen Berechnungsalgorithmus (14), insbesondere Levenberg-Marquart-Methode oder Carleman-Linearisierung oder dem Nelder-Mead-Verfahren, angepasst wird.

7. Verfahren nach einem der vorherigen Ansprüche,
**dadurch gekennzeichnet,**
**dass** das Modell (9) von einem Sicherheitsmanagement (15) überwacht wird.

8. Verfahren nach einem der vorherigen Ansprüche,
**dadurch gekennzeichnet,**
**dass** der elektrische Energiespeicher hinsichtlich des Ladezustands, derTemperatur, der Stromabgabe sowie des Spannungsniveaus auf Plausibilität geprüft wird.

9. Verfahren nach Anspruch 8,
**dadurch gekennzeichnet,**
**dass** bei einem nicht plausiblen Zustand der elektrische Energiespeicher gestuft oder vollständig deaktiviert wird.

## Claims

1. Method for controlling a hybrid drive in a rail vehicle, in which an electronic route timetable (SPL) is predefined as route-section-related speeds by means of a train control device (2), before the start of a journey route-section-related driving modes (AA) of the rail vehicle are determined predictably by means of the electronic route timetable (SPL) using a model (9), wherein the model (9) has a calculation (10) in which setpoint system variables (SG(SL)) of the hybrid drive are determined using the model (9), in which in the driving mode a deviation (dS) of actual system variables (SG(ACT)) from the setpoint system variables (SG(SL)) is calculated, in which it is decided, on the basis of the deviation (dS) by a limit value consideration, whether the model (9) is trained by means of the actual system variables (SG (ACT)), wherein the calculation (10) is adapted, or whether no action for an adjustment of the calculation (10) is made, in which in the driving mode a position deviation (dPOS) of an actual position (POS(ACT)) relative to a setpoint position (POS(SL)) of the rail vehicle is determined, wherein the setpoint position (POS(SL)) is determined by the adjusted calculation (10) of the electronic route timetable (SPL), a time reserve (tRES) is calculated on the basis of the position deviation (dPOS) and in which a current driving mode (AA) is maintained or changed as a function of the time reserve (tRES).

2. Method according to claim 1, **characterized in that** in the case of a negative time reserve (tRES) in the sense of a delay there is changeover into a driving mode (AA1) with a relatively high power output, in the case of a time reserve (tRES) within a tolerance band (TB) the driving mode (AA) is maintained, and in the case of a positive time reserve (tRES) in the sense of a premature arrival there is changeover into a driving mode (AA2) with the lowest energy consumption.

3. Method according to claim 2, **characterized in that** there is changeover into the driving mode (AA1) with a relatively high power output or with the lowest energy consumption (AA2) after enabling by a control centre or after enabling of a modified electronic route timetable (SPLm).

4. Method according to claim 1, **characterized in that** before the start of the journey the route-section-related driving modes (AA) and setpoint system variables (SG(SL)) of the hybrid drive are determined predictively using the model (9) on the basis of the electronic route timetable (SPL), an altitude profile and the environmental conditions.

5. Method according to claim 4, **characterized in that** there is no intervention into the system if the deviation (dS) of the actual system variables (SG(ACT)) from the setpoint system variables (SG(SL)) is smaller than a limiting value (GW), and in the event of a deviation (dS) which is larger than the limiting value (GW) the model (9) is adapted by means of the actual system variables (SG(ACT)).

6. Method according to claim 5, **characterized in that** the model (9) is adapted by means of a predefined calculation algorithm (14), in particular the Levenberg-Marquart method or Carleman-linearization or the Nelder-Mead method.

7. Method according to one of the preceding claims, **characterized in that** the model (9) is monitored by a safety management system (15).

8. Method according to one of the preceding claims, **characterized in that** the electrical energy accumulator is checked for plausibility with respect to the state of charge, the temperature, the power output and the voltage level.

9. Method according to claim 8, **characterized in that** in the event of an implausible state the electrical energy accumulator is deactivated in a stepped fashion or completely.

## Revendications

1. Procédé pour commander un groupe propulseur hybride dans un véhicule ferroviaire, dans lequel un plan de route par tronçon (SPL) électronique est prédéfini sous la forme de vitesses associées a chaque tronçon par le biais d'un appareil de commande de train (2), les types de groupe propulseur (AA) du véhicule ferroviaire associes à chaque tronçon étant déterminés de façon prédictive à l'aide du plan de route par tronçon (SPL) électronique avant le départ, par le biais d'un modèle (9), le modèle (9) comportant un calcul (10), les ordres de grandeur théoriques du système (SG(SL)) du groupe propulseur hybride étant déterminés par le biais du modèle (9), un écart (dS) entre les ordres de grandeur réels du système (SG(IST)) et les ordres de grandeur théoriques du système (SG(SL)) étant calculé en mode de fonctionnement en conduite, l'écart (ds) permettant de décider si le modèle (9) est entrainé à l'aide des ordres de grandeur réels du système (SG(IST)), où le calcul (10) est ajusté, ou si aucune mesure n'est prise pour ajuster le calcul (10), un écart de position (dPOS) de la position réelle (POS(IST)) par rapport à une position théorique (POS(SL)) du véhicule ferroviaire où la position théorique (POS(SL)) est déterminée par le calcul (10) déduite à partir du plan de route par tronçon (SPL) électronique étant déterminé dans le mode de fonctionnement en conduite, une réserve de temps (tRES) étant calculée a l'aide de l'écart de position (dPOS) et le type de groupe propulseur (AA) actuellement utilise étant conserve ou change en fonction de la réserve de temps (tRES) disponible.

2. Procédé selon la revendication 1, **caractérisé en ce qu'**en cas de réserve de temps (tRES) négative dans le sens d'un retard, on change de type de groupe propulseur (AA1) pour augmenter la puissance, que dans le cas d'une réserve de temps (tRES) comprise dans une plage de tolérance (TB), on maintient le type de groupe propulseur (AA) et que dans le cas d'une réserve de temps (tRES) positive dans le sens d'une arrivée en avance, on change le type de groupe propulseur (AA2) pour réduire la consommation d'énergie.

3. Procédé selon la revendication 2, **caractérisé en ce qu'**on change le type de groupe propulseur (AA1) pour augmenter la puissance ou pour réduire la consommation d'énergie (AA2) après réception d'une instruction provenant d'un point de contrôle ou après réception d'un plan de route par tronçon (SPLm) électronique modifie.

4. Procédé selon la revendication 1, **caractérisé en ce qu'**avant le départ, les types de groupe propulseur (AA) associes à chaque tronçon et les ordres de grandeur théoriques du système (SG (SL)) du groupe propulseur hybride sont déterminés de façon prédictive par le biais du modèle (9), a l'aide du plan de route par tronçons (SPL) électronique, d'un profil altimétrique et des conditions environnementales.

5. Procédé selon la revendication 4, **caractérisé en ce qu'**aucune intervention n'est réalisée dans le système lorsque l'écart (dS) entre les ordres de grandeur réels du système (SG(IST)) et les ordres de grandeur théoriques du système (SG(SL)) est inferieur a la valeur limite (GW) et qu'en cas d'écart (dS) supérieur a une valeur limite (GW), le modèle (9) est adapté en fonction des ordres de grandeur réels du système (SG(IST)).

6. Procédé selon la revendication 5, **caractérisé en ce que** le modèle (9) est adapté à l'aide d'un algorithme de calcul (14) prédéfini, notamment la méthode de Levenberg-Marquart ou la linéarisation de Carleman ou le procédé de Nelder-Mead.

7. Procédé selon l'une quelconque des revendications précédentes, **caractérisé en ce que** le modèle (9) est surveille par un système de gestion de la sécurité (15).

8. Procédé selon l'une quelconque des revendications précédentes, **caractérisé en ce que** l'état de fonctionnement plausible de l'accumulateur d'énergie électrique est surveille en fonction de l'état de charge, de la température, de l'utilisation de courant ainsi que du niveau de tension.

9. Procédé selon la revendication 8, **caractérisé en ce que** lorsque l'état obtenu n'est pas plausible, l'accumulateur d'énergie électrique est aménagé ou entièrement désactivé.
